# EUROPEAN PATENT APPLICATION

(11) **EP 1 148 220 A2**
(43) Date of publication of application: **24.10.2001**
(21) Application number: 00311369.3
(22) Date of filing: 19.12.2000
(51) Int. Cl.: F02C 7/18

(54) **Combustion turbine cooling media supply system and related method**

(30) Priority: 19.04.2000 US 552687
(71) Applicant: GENERAL ELECTRIC COMPANY, Schenectady, NY 12345 (US)
(72) Inventor: Priestley, Robert Russell, Ballston Lake, New York 12019 (US)
(74) Representative: Pedder, James Cuthbert

(57) **Abstract**

A land based gas turbine apparatus includes an integral compressor (110, 210); a turbine (114, 214) having a combustor (112, 212) to which air from the integral compressor and fuel are supplied; and a generator (132) operatively connected to the turbine for generating electricity; wherein hot gas path component parts in the turbine are cooled entirely or at least partially by cooling air supplied by an external compressor (136, 236). A method is also provided which includes the steps of supplying at least a portion of the cooling air to the hot gas path parts in the turbine (114, 214) from the integral compressor (110, 210); and supplying a remaining portion of the cooling air from an external compressor (136, 236).

## Description

This invention relates to supplying cooling media to a combustion turbine via a separate compressor and coolant conditioning system.

Most combustion turbines use air bled from the turbine's integral compressor to cool the hot gas path parts of the turbine. Some combustion turbines bleed air from the integral compressor and route it through external heat exchangers (to cool the air) or other conditioning means before it is reintroduced into the turbine area for cooling duty. Others bleed air from the integral compressor and route it internally within the turbine to the hot gas path for cooling.

Turbine performance tends to degrade when ambient temperature exceeds a certain predetermined level. Specifically, air flow through the turbine is reduced as ambient temperature rises. Presently employed integral cooling systems using only turbine compressor discharge air for cooling cannot compensate for reduced flow due to high ambient temperature.

According to a first aspect of the invention, there is provided a land based gas turbine apparatus comprising: an integral compressor; a turbine having a combustor to which air from the integral compressor and fuel are supplied; and a generator operatively connected to the turbine for generating electricity; wherein hot gas path component parts in said turbine are cooled at least partially by cooling air supplied by an external compressor.

At least low and intermediate pressure cooling air may be supplied by the external compressor.

High pressure cooling air may be supplied by the external compressor.

Cooling air supplied by the external compressor may be humidified.

The external compressor may be an intercooled compressor.

All of the cooling air may be supplied by the external compressor.

According to a second aspect of the invention, there is provided a land based gas turbine apparatus comprising: an integral compressor; a turbine having a combustor to which air from the integral compressor and fuel are supplied; and a generator operatively connected to the turbine for generating electricity; wherein hot gas path component parts in said turbine are supplemented by cooling air from an external compressor.

According to a third aspect of the invention, there is provided a method of insuring peak power capability for a gas turbine power plant including an integral compressor, a turbine and a generator and wherein hot gas path parts in the turbine are at least partially cooled by cooling air, the method comprising: supplying at least a portion of the cooling air to said hot gas path parts in the turbine from said integral compressor; and supplying a remaining portion of said cooling air from an external compressor.

At least low and intermediate pressure cooling air may be supplied by the external compressor.

High pressure cooling air may be supplied by the external compressor.

Cooling air supplied by the external compressor may be humidified.

All of said cooling air may be supplied by the external compressor.

The supply of the remaining portion of the cooling air from an external compressor is commenced when ambient temperature rises to a predetermined value or when air flow rate through the integral compressor falls to a predetermined value.

Thus, in accordance with this invention, conditioned cooling media is supplied to a combustion turbine through a separate supply system in an efficient and controlled manner, thereby increasing overall combustion turbine or combined cycle plant output and efficiency. This separate cooling media supply system may provide all or part of the combustion turbine's cooling requirement. For example, the separate cooling media supply system could supply all of the low, intermediate and high pressure coolant. Alternatively, the external cooling supply system could supplement the low, intermediate and high pressure cooling air provided by the integral compressor. In still another variation, the external compressor could supply the low and intermediate pressure cooling air while the integral compressor supplies the high pressure cooling air. Other variations are possible as well. The coolant supply system may also be integrated within a combined cycle to exchange energy with other fluid streams in a manner to enhance overall plant performance.

By utilizing an external compressor, the cooling flow to the turbine can be increased when necessary to further reduce temperatures in the turbine and thereby increase overall efficiency.

In its broader aspects, therefore, the invention relates to a land based gas turbine apparatus comprising an internal compressor; a turbine having a combustor to which air from the integral compressor and fuel are supplied; and a generator operatively connected to the turbine for generating electricity; wherein hot component parts in the turbine are cooled at least partially by cooling air supplied by an external compressor.

In another aspect, the invention relates to a method of insuring peak power capability for a gas turbine power plant including an integral compressor, a turbine and a generator and wherein hot gas path parts in the turbine are at least partially cooled by cooling air, the method comprising supplying at least a portion of the cooling air to the hot gas path parts in the turbine from the integral compressor; and supplying a remaining portion of the cooling air from an external compressor.

The invention will now be described in greater detail, by way of example, with reference to the drawings, in which:-
FIGURE 1 is a schematic diagram of a known cooling arrangement for a combustion turbine;
FIGURE 2 is a schematic diagram of a cooling arrangement for a combustion turbine in accordance with an exemplary embodiment of this invention; and
FIGURE 3 is a schematic diagram of a cooling arrangement for a combustion turbine in accordance with another exemplary embodiment of the invention.

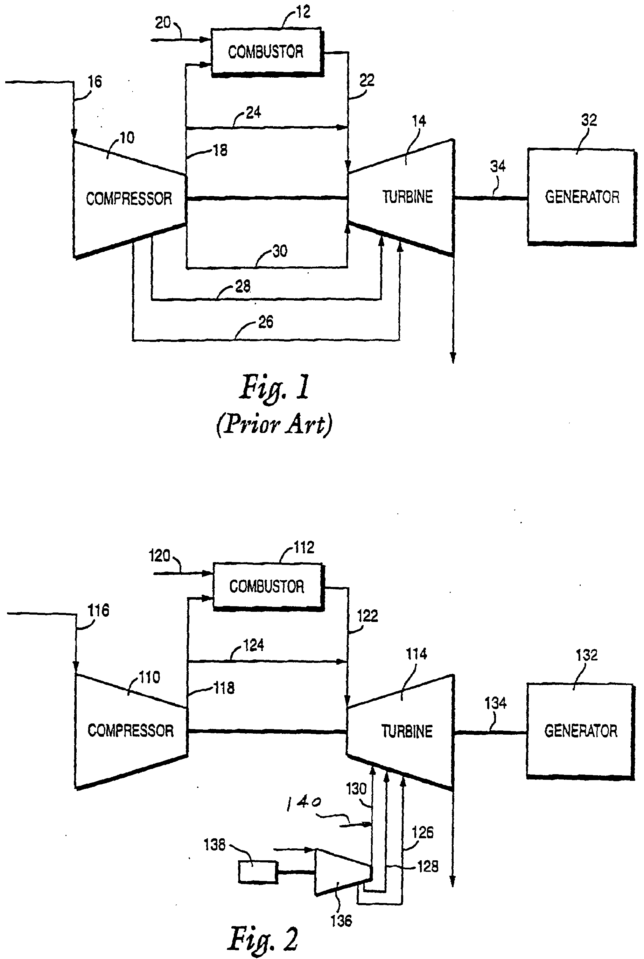

Figure 1 represents a conventional cooled combustion turbine system including an integral compressor 10, combustor 12 and turbine 14. Inlet air is supplied to the compressor via stream 16. Compressor air is supplied to the combustor via stream 18 where it mixes with fuel supplied by stream 20. The hot combustion gas is supplied to the turbine 14 via stream 22. Some compressor air may be diverted to bypass the combustor via stream 24, entering the hot combustion gases before entering the turbine. The flow streams 26, 28 and 30 represent cooling air extractions from the integral compressor that are routed to the turbine section of the machine for cooling hot gas path component parts. Streams 26 and 28 that supply the low and intermediate pressure coolant, respectively, may be routed externally of the compressor casing and reintroduced through the turbine casing into the parts that need cooling. Stream 30 supplies the high pressure coolant and is typically routed internally of the machine. The compressor 10, turbine 14 and generator 32 are shown in a single shaft configuration with the single shaft 34 also driving the generator 32.

Figure 2 illustrates an example of the present invention and where, for the sake of convenience and ease of understanding, reference numerals similar to those used in Figure 1 are applied to corresponding components, but with the prefix "1" added. As in the conventional system described above, inlet air is supplied to the compressor 110 via stream 116. Compressed air is supplied to the combustor 112 via stream 118 where it mixes with fuel supplied to the combustor via stream 120. Bypass air may be supplied to the hot combustion gases via stream 124. Here, however, the respective low, intermediate and high pressure cooling air streams 126, 128 and 130 are generated by a separate external compressor 136 driven by a motor 138.

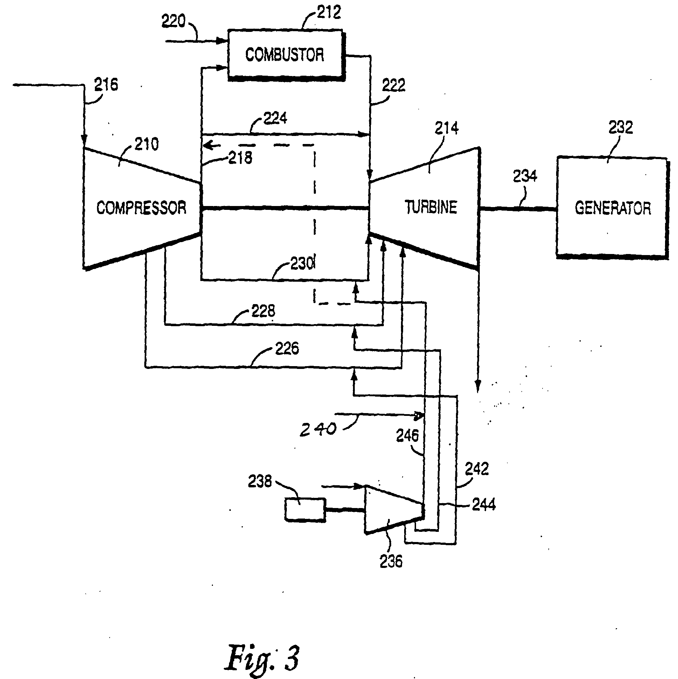

Figure 3 illustrates a variation where cooling air is supplied by both the integral turbine compressor 210 and by the external compressor 236. Here, the low, intermediate and high pressure cooling air is supplied by integral compressor 210 via respective streams 226, 228 and 230, but supplemented as necessary by cooling air supplied by external compressor 236 via respective low, intermediate and high pressure streams 242, 244 and 246.

Additional features can be added to the separate coolant supply system, such as humidification of the coolant. One suitable means of humidification employs a saturator and hot water heated by waste or primary energy. Moisture introduction is shown in Figures 2 and 3 via streams 140, and 240, respectively. Waste heat is readily available from the turbine exhaust in single cycle systems for evaporation of water that can then be introduced into the discharge air of compressor 136 or 236.

The coolant supply system can modulate the flow, pressure, temperature and composition of the supplied cooling media. This may be achieved by continuous monitoring of compressor discharge temperature and pressure; turbine discharge temperature and pressure; and flow rate. Thus, for example, the external compressor could be activated when the temperature rises to a predetermined level and/or when the air flow rate through the integral compressor falls to a predetermined level. The coolant supply system could also employ an intercooled compressor.

The above described invention thus provides peak power capability for a gas turbine, particularly when ambient temperature rises to a level otherwise resulting in reduced output. In other words, when ambient temperature rises to the point where air flow decreases (with consequent decrease in cooling efficiency), the external compressor 136 or 236 may be employed to maintain peak efficiency by supplying all, or additional cooling air in an amount necessary to optimize the flow of cooling air to the hot gas path parts of the turbine. Further in this regard, by using an external compressor, greater cooling air flow can be provided than that available from the integral turbine compressor since only a small percentage of air from the turbine compressor is available for cooling duty. In other words, in conventional systems the amount of cooling air is limited by the capacity of the integral compressor. By supplying cooling air from an external compressor where all of the air is available for cooling duty, lower temperature in the turbine can be achieved, thereby improving performance. This is true whether the external compressor 136, 236 is used alone or in conjunction with the integral turbine compressor 110, 210.

## Claims

1. A land based gas turbine apparatus comprising:
an integral compressor (110, 210);
a turbine (114, 214) having a combustor (112, 212) to which air from the integral compressor and fuel are supplied; and
a generator (132, 232) operatively connected to the turbine for generating electricity; wherein hot gas path component parts in said turbine are cooled at least partially by cooling air supplied by an external compressor (136, 236).

2. The apparatus of claim 1 wherein at least low and intermediate pressure cooling air is supplied by said external compressor (136, 236).

3. The apparatus of claim 2 wherein high pressure cooling air is supplied by said external compressor (136, 236).

4. The apparatus of claim 1 wherein cooling air supplied by said external compressor (136, 236) is humidified.

5. The apparatus of claim 1 wherein said external compressor (136, 236) is an intercooled compressor.

6. A method of insuring peak power capability for a gas turbine power plant including an integral compressor (110, 210), a turbine (114, 214) and a generator (132, 232) and wherein hot gas path parts in the turbine are at least partially cooled by cooling air, the method comprising:
supplying at least a portion of the cooling air to said hot gas path parts in the turbine from said integral compressor (110, 210); and
supplying a remaining portion of said cooling air from an external compressor (236).

7. The method of claim 6 wherein at least low and intermediate pressure cooling air is supplied by said external compressor (136, 236).

8. The method of claim 6 or 7 wherein high pressure cooling air is supplied by said external compressor (136, 236).

9. The method of claim 6, 7 or 8 wherein cooling air supplied by said external compressor (136, 236) is humidified.

10. The method of claim 6 wherein all of said cooling air is supplied by said external compressor (136).
